# EUROPÄISCHE PATENTSCHRIFT

(11) **EP 1 600 259 B1**
(45) Veröffentlichungstag und Bekanntmachung des Hinweises auf die Patenterteilung: **28.03.2007**
(21) Anmeldenummer: 05004281.1
(22) Anmeldetag: 28.02.2005
(51) Int. Cl.: B24B 45/00, B27B 5/32, B23Q 3/12

(54) **Spannvorrichtung zum Festspannen eines Gegenstandes gegen einen Anschlag**
Clamping device for fixing an object against an abutment
Dispositif de serrage pour tendre un objet contre une butée

(30) Priorität: 22.05.2004 DE 102004024959
(43) Veröffentlichungstag der Anmeldung: 30.11.2005
(73) Patentinhaber: Narex Ceska Lipa a.s., 47037 Ceska Lipa (CZ)
(72) Erfinder: Pospisil, Milan, 47001 Ceska Lipa (CZ)
(74) Vertreter: Reimold, Otto

(56) Entgegenhaltungen:
- DE-A1- 10 137 445
- DE-A1- 19 831 542
- DE-C1- 3 824 040
- US-A- 6 149 364
- US-A1- 2004 018 063

## Beschreibung

Die Erfindung betrifft eine Spannvorrichtung zum Festspannen eines Gegenstandes gegen einen Anschlag, insbesondere zum Festspannen eines beim Betrieb rotierenden Werkzeugs, beispielsweise eine Schleifscheibe oder ein sonstiges scheibenförmiges Werkzeug, an der Abtriebswelle einer Werkzeugmaschine, mit einer ein Innengewinde aufweisenden, auf einen Gewindebolzen, insbesondere ein Gewindeabschnitt der Abtriebswelle, aufzuschraubenden Spannmutter, die einen nach radial außen vorstehenden Spannflansch bildet, einem zur Spannmutter koaxialen Druckring, der dem Spannflansch in axialer Richtung zum festzuspannenden Gegenstand hin vorgelagert ist, mit der Spannmutter drehfest und in axialer Richtung verschieblich verbunden ist und gegen den festzuspannenden Gegenstand wirkt, und einem zur Spannmutter und dem Druckring koaxialen, am Umfang der Spannvorrichtung angeordneten, verdrehbaren und die Spannmutter in beiden Drehrichtungen mitnehmenden Betätigungsring, wobei in axialer Richtung zwischen dem Spannflansch und dem Druckring radial innerhalb des Betätigungsrings mit dem Betätigungsring zusammenwirkende Spannmittel angeordnet sind, derart, dass beim Verdrehen des Betätigungsrings in Festspannrichtung der gegen den festzuspannenden Gegenstand wirkende Druckring gegen den Spannflansch fest abgestützt ist und die feste Abstützung beim Verdrehen des Betätigungsrings in entgegengesetzter Löserichtung aufgehoben wird, wobei die Spannmittel einen zur Spannmutter koaxialen Spannring enthalten, der aus einer unwirksamen Ringform grö-ßeren Durchmessers, in der die feste Abstützung aufgehoben ist, durch Aufbringen einer Radialkraft vom Betätigungsring her elastisch in eine wirksame Ringform kleineren Durchmessers, in der sich der gegen den festzuspannenden Gegenstand wirkende Druckring über den Spannring fest gegen den Spannflansch abstützt, verformbar ist.

Eine solche Spannvorrichtung lässt sich aus ihrem festgespannten Zustand ohne Zuhilfenahme eines Werkzeugs ohne Schwierigkeiten lösen. Hierzu muss der Benutzer lediglich den Betätigungsring in Löserichtung verdrehen, so dass die Spannung zwischen dem Druckring und dem betreffenden Gegenstand aufgehoben und der Druckring somit von dem Gegenstand gelöst wird. Beim weiteren Verdrehen des Betätigungsrings wird die Spannmutter mitgenommen und kann abgeschraubt werden.

Spannvorrichtungen dieser Art werden beispielsweise zum Festspannen der Schleifscheibe eines Winkelschleifers verwendet. Sie lässt sich jedoch auch bei allen anderen Werkzeugmaschinen einsetzen, die ein auswechselbares, beim Betrieb rotierendes Werkzeug aufweisen. Dabei ist die Spannvorrichtung insbesondere dann von Vorteil, wenn sie sich beim Betrieb der Werkzeugmaschine von selbst noch weiter festzieht.

Bei einer aus der US 6 149 364 bekannten Spannvorrichtung der eingangs genannten Art weist der Spannring eine über den Umfang geschlossene Gestalt auf und ist durch radial verlaufende Einsschnitte in in Umfangsrichtung aufeinander folgende Ringbereiche unterteilt, so dass in Folge der Einschnitte eine Veränderung des Ringdurchmessers möglich ist. Der Betätigungsring bildet einen nach radial innen vorstehenden Ringvorsprung mit einer konischen Innenseite, die einer entsprechend konischen Außenseite des Spannrings zugeordnet ist. Der Betätigungsring steht in Gewindeeingriff mit dem Druckring. Bei seinem Verdrehen verlagert sich der Betätigungsring in axialer Richtung mit Bezug auf den Spannring, so dass sich die von der konischen Innenfläche des Betätigungsrings auf die konische Außenfläche des Spannrings ausgeübte Kraft und somit der Durchmesser des Spannrings verändert.

Der vorliegenden Erfindung liegt die Aufgabe zugrunde, eine Spannvorrichtung der eingangs genannten Art zu schaffen, die in der Handhabung einfach ist und einen teilearmen und somit kostengünstigen Aufbau besitzt.

Diese Aufgabe wird erfindungsgemäß dadurch gelöst, dass der Spannring geschlitzt ist, so dass er mit Abstand zueinander angeordnete Spannringenden aufweist, und dass die Spannmittel in radialer Richtung zwischen dem Spannring und dem Betätigungsring über den Umfang verteilt angeordnete Druckkörper enthalten und der Betätigungsring an seinem Innenumfang jeweils einem Druckkörper zugeordnete Druckflächen und in radialer Richtung mit Bezug auf die Druckflächen nach radial au-ßen erweiterte Lösebereiche aufweist, derart, dass beim Verdrehen des Betätigungsrings in Festspannrichtung jeweils eine Druckfläche radial außen am betreffenden Druckkörper angreift, so dass dieser den Spannring in seine wirksame Ringform drückt, und beim Verdrehen des Betätigungsrings in Löserichtung jeweils ein erweiterter Lösebereich zu dem betreffenden Druckkörper gelangt, so dass dieser nach radial außen hin ausweichen kann.

Beim Festspannen nimmt der Spannring seine wirksame Ringform ein, so dass er zwischen dem Ringflansch der Spannmutter und dem Druckring so angeordnet ist, dass der Spannring gegen den Spannflansch abgestützt wird. Verdreht man also den Betätigungsring in Festspannrichtung, wird der Druckring über den Spannring fest gegen den festzuspannenden Gegenstand gedrückt.

Zum Lösen der Verspannung wird der Betätigungsring in entgegengesetzter Löserichtung gedreht, so dass sich der Spannring in seine größeren Durchmesser aufweisende unwirksame Ringform aufweitet. Der Spannring belastet dann den Druckring nicht mehr, so dass dieser entlastet ist. Durch weiteres Verdrehen des Betätigungsrings lässt sich dann die Spannmutter abschrauben. Dabei wird der Druckring mitgenommen

Der Betätigungsring wirkt nicht unmittelbar sondern über die Druckkörper auf den Spannring. Je nach der Drehstellung des Betätigungsrings befinden sich die am Innenumfang des Betätigungsrings ausgebildeten Druckflächen oder Lösebereiche an den Stellen der Druckkörper, so dass die Druckkörper gegen den Spannring drücken oder den Spannring frei geben.

Die erfindungsgemäße Spannvorrichtung besteht aus verhältnismäßig wenigen Einzelteilen. Sie enthält ferner praktisch keine Verschleißteile und ist somit nicht störanfällig

Aus der DE 198 31 542 A1 sind Spannmittel an sich bekannt, die über den Umfang verteilt angeordnete Druckkörper enthalten, wobei der Betätigungsring an seinem Innenumfang jeweils einem Druckkörper zugeordnete Druckflächen und in radialer Richtung mit Bezug auf die Druckflächen nach radial außen erweiterte Lösebereiche aufweist. Ansonsten liegen jedoch andere Verhältnisse vor, insbesondere ist kein geschlitzter Spannring mit im Abstand zueinander angeordneten Endbereichen vorhanden. Die Druckkörper wirken stattdessen jeweils gegen ein gesondertes Spannsegment.

Zweckmäßige Ausgestaltungen der Erfindung sind in den Unteransprüchen angegeben. Nachstehend wird ein Ausführungsbeispiel der Erfindung anhand der Zeichnung erläutert. Es zeigen:
- Figur 1: eine erfindungsgemäße Spannvorrichtung bei ihrer Anwendung zusammen mit der Schleifscheibe eines Winkelschleifers, die mittels der Spannvorrichtung fest mit der Abtriebswelle des Winkelschleifers verspannt ist, im Längsschnitt entsprechend der Schnittlinie I-I in Figur 2,
- Figur 2: die erfindungsgemäße Spannvorrichtung gemäß Figur 1 bei weggenommenem Druckring in axialer Richtung in Figur 1 von links gesehen, wobei sich der Spannring der Figur 1 entsprechend in seiner wirksamen Ringform befindet,
- Figur 3: die Anordnung nach Figur 1 im Längsschnitt gemäß der Schnittlinie III-III in Figur 4, wobei der Betätigungsring im Unterschied zur Figur 1 in Löserichtung verdreht ist, so dass der Spannring seine unwirksame Ringform einnimmt, und
- Figur 4: die gleiche Spannvorrichtung in der Figur 2 entsprechender Darstellungsweise, wobei der Betätigungsring seine der Figur 3 entsprechende Drehstellung einnimmt, so dass sich der Spannring der Figur 3 entsprechend in seiner unwirksamen Ringform befindet.

Die aus der Zeichnung hervorgehende Spannvorrichtung 1 besteht im wesentlichen aus einer Spannmutter 2, einem Druckring 3, einem Betätigungsring 4 und Spannmitteln 5.

Diese Spannvorrichtung dient im dargestellten Falle zum Festspannen einer beim Betrieb rotierenden Schleifscheibe 6 an der Abtriebswelle 7 eines Winkelschleifers. Es könnte sich jedoch auch um eine andere Werkzeugmaschine mit einem anderen scheibenförmigen Werkzeug handeln. Außerdem lässt sich die Spannvorrichtung 1 überall da verwenden, wo mit Hilfe eines Gewindebolzens irgendein Gegenstand gegen einen Anschlag festgespannt wird.

Im dargestellten Falle wird die Schleifscheibe 6 gegen einen ringförmigen Absatz 8 der Abtriebswelle 7 gespannt. Dabei befindet sich beim Ausführungsbeispiel zwischen der Schleifscheibe 6 und dem Absatz 8 ein Scheibenkörper 9, der sich radial weiter nach außen als der Absatz 8 erstreckt und radial innen einen in die zentrale Bohrung 11 der Schleifscheibe 6 eingreifenden Zentrierhals 10 aufweist. Das freie Ende der Abtriebswelle 7 wird von einem von dem Absatz 8 ausgehenden, ein Außengewinde 13 aufweisenden Abtriebswellen-Gewindeabschnitt 12 gebildet, auf den die Spannvorrichtung 1 aufgeschraubt wird.

Die Spannmutter 2 weist ein Innengewinde 14 auf, mit dem sie auf den Abtriebswellen-Gewindeabschnitt 12 geschraubt wird. Dabei bildet die Spannmutter 2 eine das Innengewinde 14 aufweisende, zur Rotationsachse 15 der Abtriebswelle 7 koaxiale, nabenartige Zentralpartie 17 und eine am der Schleifscheibe 6 abgewandten Bereich der Zentralpartie 17 nach radial außen vorstehenden Spannflansch 16.

Der Druckring 3 ist konzentrisch zur Spannmutter 2 angeordnet und ist auf der Zentralpartie 17 der Spannmutter 2 gelagert. Dabei sitzt der Druckring 3 mit einer in axialer Richtung von der Schleifscheibe 6 her gesehen zurückgesetzten Ringpartie 18 auf der Spannmutter-Zentralpartie 17 und ist an seiner dem Spannflansch 16 entgegengesetzten Seite durch einen an der Zentralpartie 17 gelagerten Haltering 19 in axialer Richtung mit axialem Bewegungsspiel gesichert. Die axiale Sicherung der Druckrings 3 an der Spannmutter 2 könnte auch in anderer Weise erfolgen.

Der Druckring 3 ist dem Spannflansch 16 in axialer Richtung zur Schleifscheibe 6 hin vorgelagert und wirkt beim Festspannen gegen die Schleifscheibe 6. Der Druckring 3 ist ferner drehfest und in axialer Richtung verschieblich mit der Spannmutter 2 verbunden. Diese Verbindung kann auf verschiedene Weise verwirklicht werden. Beim zweckmäßiger Ausführungsbeispiel ist hierzu vorgesehen, dass die Zentralpartie 17 der Spannmutter 2 an ihrem Außenumfang eine Abflachung 20 aufweist, der eine am Innenumfang des Druckrings 3 angeordnete Abflachung (in der Zeichnung nicht sichtbar) zugeordnet ist. Auf diese Weise sitzt der Druckring 3 unverdrehbar auf der Zentralpartie 17 und ist dabei axial beweglich.

Die Spannmutter 2 weist im Bereich ihres Spannflansches 6 an dessen dem Druckring 3 zugewandten Seite eine kegelartig geneigte Ringschrägfläche 21 auf, deren Neigung in axialer Richtung vom Druckring 3 weg nach radial außen gerichtet ist. Die Ringschrägfläche 21 ist in Umfangsrichtung umlaufend ausgebildet.

An Stelle an der Spannmutter könnte die Ringschrägfläche in wirkungsmäßig angepasster Gestalt auch am Druckring 3 vorgesehen sein. Auch wäre es möglich, sowohl an der Spannmutter 2 als auch am Druckring 3 jeweils eine Ringschrägfläche anzuordnen.

Der Betätigungsring 4 ist am Umfang der Spannvorrichtung 1 und dabei koaxial zur Spannmutter 2 und dem Druckring 3 angeordnet. Der Betätigungsring 4 ist ferner mit der Hand verdrehbar und nimmt die Spannmutter 2 und den mit dieser drehfest verbundenen Druckring 3 in beiden Drehrichtungen mit. Dies bedeutet nicht, dass bei einer Umkehr der Drehrichtung des Betätigungsringes 4 die Spannmutter 2 und der Druckring 3 dieser Richtungsumkehr sofort folgen. Der Betätigungsring 4 dreht sich vielmehr zunächst allein. Erst nach einem Verdrehen des Betätigungsringes 4 über einen gewissen Übergangsbereich hinweg werden die Spannmutter 2 und der Druckring 3 in der betreffenden Drehrichtung mitgenommen.

Der Druckring 3 und der Spannflansch 16 liegen sich mit Abstand gegenüber. Radial außen greift der Betätigungsring 4 zwischen den Druckring 3 und den Spannflansch 16. Dabei ist beiderseits der zwischen den Druckring 3 und den Spannflansch 16 greifenden Partie des Betätigungsringes 4 jeweils ein Dicht- und Lagerring 22, 23 angeordnet.

In axialer Richtung zwischen dem Spannflansch 16 und dem Druckring 3 und dabei radial innerhalb des Betätigungsrings 4 befinden sich die mit dem Betätigungsring 4 zusammenwirkenden Spannmittel 5. Dabei ist die Anordnung so getroffen, dass beim Verdrehen des Betätigungsrings 4 in Festspannrichtung 25 der gegen die Schleifscheibe 6 wirkende Druckring 3 fest gegen den Spannflansch 16 abgestützt ist und dass diese feste Abstützung beim Verdrehen des Betätigungsrings 4 in entgegengesetzter Löserichtung 26 aufgehoben wird.

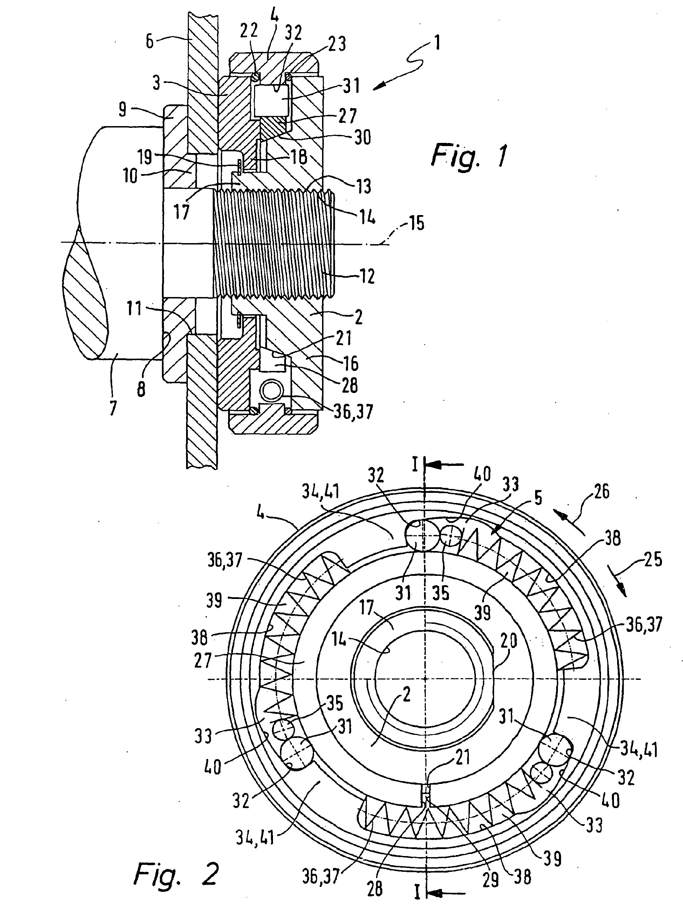

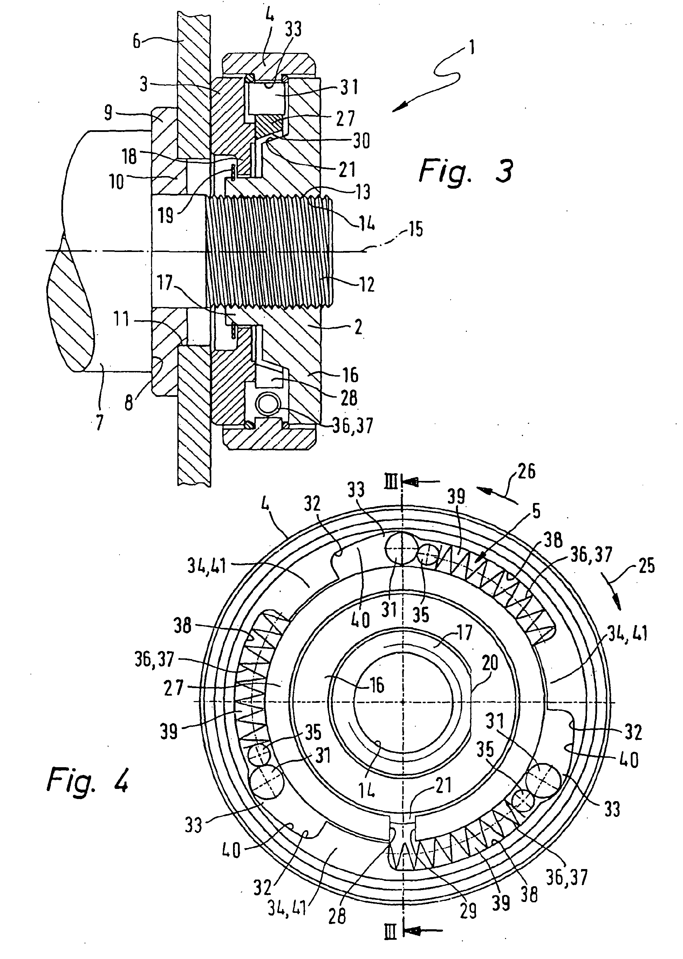

Im einzelnen enthalten die Spannmittel 5 einen zur Spannmutter 2 koaxialen, geschlitzten Spannring 27, dessen Enden 28, 29 mit Abstand zueinander angeordnet sind. Der Spannring 27 ist aus einer unwirksamen Ringform größeren Durchmessers (siehe die Figuren 3 und 4) durch Aufbringen einer Radialkraft elastisch in eine wirksame Ringform kleineren Durchmessers (siehe Figuren 1 und 2) verformbar. Diese Radialkraft wird vom Betätigungsring 4 her aufgebracht. Nimmt der Spannring 27 seine wirksame Ringform ein, stützt sich der gegen die Schleifscheibe 6 wirkende Druckring 3 über den Spannring 27 fest gegen den Spannflansch 16 ab.

Nimmt man die den Spannring 27 in seiner wirksamen Ringform kleineren Durchmessers haltende Radialkraft wieder weg, federt der Spannring 27 in seine unwirksame Ringform größeren Durchmessers, so dass die feste Abstützung des Druckrings 3 gegen den Spannflansch 16 aufgehoben wird.

Der Spannring 27 ist radial außen neben der Ringschrägfläche 21 des Spannflansches 16 angeordnet, so dass er diese umschließt. In seiner wirksamen Ringform kleineren Durchmessers wird er fest gegen die Ringschrägfläche 21 gehalten. In seiner unwirksamen Ringform größeren Durchmessers liegt er der Ringschrägfläche 21 lose gegenüber.

Der Spannring 27 bildet eine der Ringschrägfläche 21 des Spannflansches 16 zugeordnete Spannschrägfläche 30, die eine der Ringschrägfläche 21 entsprechende Neigung aufweist. Auf diese Weise bildet der Spannring 27 sozusagen einen Spannkeil, der in der wirksamen Ringform kleineren Durchmessers von radial außen her mit seiner Spannschrägfläche 30 gegen die Ringschrägfläche 21 gedrückt wird, so dass die im festgespannten Zustand auftretende Spannkraft vom Druckring 3 über die Spannschrägfläche 30 und die Ringschrägfläche 21 in die Spannmutter 2 eingeleitet wird. Wird die Radialkraft vom Spannring 27 weggenommen, federt er auf, so dass sich die Spannschrägfläche 30 von der Ringschrägfläche 21 löst und die Verspannung aufgehoben wird.

Die kegelige Spannschrägfläche 30 bildet den Innenumfang des Spannrings 27. Die Außenumfangsfläche des Spannrings 27 ist dagegen kreiszylinderisch.

Die Spannmittel 5 enthalten ferner über den Umfang verteilt angeordnete Druckkörper 31, die in radialer Richtung zwischen dem Spannring 27 und dem Betätigungsring 4 angeordnet sind. Beim zweckmäßigen Ausführungsbeispiel sind drei solche Druckkörper 31 vorhanden. Bei den Druckkörpern 31 handelt es sich zweckmäßigerweise um Wälzkörper. Dabei weisen die Druckkörper 31 bevorzugt eine zur Spannmutter 2 parallelachsige kreiszylindrische Gestalt auf. Die Druckkörper könnten jedoch prinzipiell auch von Kugeln gebildet werden.

Der Betätigungsring 4 weist an seinem Innenumfang jeweils einem Druckkörper 31 zugeordnete Druckflächen 32 und in radialer Richtung mit Bezug auf die Druckflächen 32 nach radial außen erweiterte Lösebereiche 33 auf. Verdreht man den Betätigungsring 4 in Festspannrichtung 25, greifen die Druckflächen 32 jeweils radial außen am betreffenden Druckkörper 31 an, so dass dieser den Spannring 27 in seine wirksame Ringform drückt. Beim Festspannen der Schleifscheibe 6 stützt sich der Druckring 3 dann am Spannring 27 ab, der sich dabei zwischen den Druckkörpern 31 und der Ringschrägfläche 21 der Spannmutter 2 verkeilt.

Die Druckflächen 32 sind jeweils dem dem gleichen Druckkörper 31 zugeordneten erweiterten Lösebereich 33 in Löserichtung 26 vorgelagert. Verdreht man den Betätigungsring 4 daher aus seiner den Spannring 27 über die Druckkörper 31 nach innen in seine wirksame Ringform drückenden Stellung in Löserichtung 26, gelangen die erweiterten Lösebereiche 33 am Innenumfang des Betätigungsrings 4 zu den Druckkörpern 31, so dass diese nach radial außen in die Lösebereiche 33 ausweichen können und der Spannring 27 in seine unwirksame Ringform auffedern kann.

Die Druckkörper 31 sind in Umfangsrichtung jeweils zwischen einem am Betätigungsring 4 angeordneten ersten Anschlagkörper 34 und einem an der Spannmutter 2 angeordneten zweiten Anschlagkörper 35 angeordnet. Da der Druckring 3 drehfest mit der Spannmutter 2 verbunden ist, könnten die zweiten Anschlagkörper 35 auch am Druckring angeordnet sein. Dabei ist jeder erste Anschlagkörper 34 dem jeweiligen Druckkörper 31 in Löserichtung 26 und der betreffende zweite Anschlagkörper 35 dem jeweiligen Druckkörper 31 in Festspannrichtung 25 vorgelagert.

Ferner ist eine Federeinrichtung 36 vorhanden, die sich an der Spannmutter oder dem Spannring, beim Ausführungsbeispiel an den an der Spannmutter 2 sitzenden zweiten Anschlagkörper 35, abstützt und den Betätigungsring 4 in Festspannrichtung 25 beaufschlagt.

Die Federeinrichtung 36 wird von mehreren, beim Ausführungsbeispiel von drei Federelementen 37 gebildet, die sich jeweils einerseits an einem ersten Anschlagkörper 34, und zwar an der Seite des ersten Anschlagkörpers 34, die dem zugeordneten Druckkörper 31 entgegengesetzt ist, und andererseits an dem dem jeweiligen ersten Anschlagkörper 34 in Löserichtung 26 vorgelagerten zweiten Anschlagkörper 35 abstützen.

Bei den Federelementen 37 handelt es sich zweckmäßigerweise um sich in Umfangsrichtung erstreckende Schraubenfedern.

Beim Verdrehen des Betätigungsrings 4 in Festspannrichtung 25, wenn die Druckflächen 32 die Druckkörper 31 nach radial innen drücken, liegen die ersten Anschlagkörper 34 an den Druckkörpern 31 an und halten diese gegen die zweiten Anschlagkörper 35, so dass über diese die Spannmutter 2 und mit dieser der Druckring 3 mitgenommen wird. Da die Federeinrichtung 36 den Betätigungsring 4 in Festspannrichtung 25 beaufschlagt, liegen die Druckkörper 31 auch in der Ausgangsstellung der Spannvorrichtung 1 einerseits an den ersten Anschlagkörper 34 und andererseits an den zweiten Anschlagkörpern 35 an, so dass sofort zu Beginn des Verdrehens des Betätigungsrings 4 in Festspannrichtung 25 die Spannmutter 2 mitgenommen und vorgeschraubt wird.

Das Lösen der Verspannung, das heißt das Verdrehen des Betätigungsrings 4 in Löserichtung 26, erfolgt zunächst entgegen der Kraft der Federeinrichtung 36. Die Federelemente 37 werden dabei von den ersten Anschlagkörpern 34 gegen die noch unverdrehten zweiten Anschlagkörper 35 gedrückt. Haben die erweiterten Lösebereiche 33 des Betätigungsringes 4 die Druckkörper 31 erreicht, löst sich, wie geschildert, die Verspannung. Beim weiteren Verdrehen des Betätigungsrings 4 in Löserichtung 26 wird dann die Spannmutter 2 und mit dieser der Druckring 3 mitgenommen. Diese Mitnahme erfolgt über die Federelemente 37.

Beim Betrieb des Schleifgerätes übt die Schleifscheibe 6 eine in Umfangsrichtung wirkende Kraft auf den Druckring 3 aus. Hierdurch wird die drehfest mit dem Druckring 3 verbundene Spannmutter 2 noch stärker festgezogen, was die Betriebssicherheit erhöht. Auch dieses starke Verspannen wird sofort gelöst, wenn man den Betätigungsring 4 kurz in Löserichtung 26 verdreht.

Der Betätigungsring 4 weist über den Umfang verteilt angeordnete, durch die ersten Anschlagkörper 34 voneinander getrennte, dem Spannring 27 mit radialem Abstand entlang verlaufende Innenumfangsabschnitte 38 auf, so dass zwischen den Innenumfangsabschnitten 38 und dem Spannring 27 jeweils ein sich in Umfangsrichtung erstreckender Zwischenraum 39 vorhanden ist. In diese Zwischenräume 39 ragt jeweils einer der zweiten Anschlagkörper 35, die zweckmäßigerweise jeweils von einem von der Spannmutter 2 - prinzipiell könnte es auch der Spannring sein - abstehenden Stiftelement gebildet werden.

In dem jeweiligen Zwischenraum 39 ist einerseits des zweiten Anschlagkörpers 35 der zugeordnete Druckkörper 31 und andererseits des zweiten Anschlagkörpers 35 das jeweilige Federelement 37 angeordnet.

Die genannten Innenumfangsabschnitte 38 des Betätigungsrings 4 bilden jeweils eine der genannten Druckflächen 32 und einen der Druckfläche 32 benachbarten, nach radial außen erweiterten Lösebereich 33.

Die Lösebereiche 33 bilden zumindest an ihrer der jeweiligen Druckfläche 32 zugewandten Seite jeweils eine schräge oder bogenförmige Auflauffläche 40, über die der betreffende Druckkörper 31 beim Verdrehen des Betätigungsrings 4 in Festspannrichtung 35 aus dem Lösebereich 33 zur Druckfläche 32 gelangt.

Die ersten Anschlagkörper 34 werden zweckmäßigerweise von einstückig nach radial innen vorstehenden Ringsegmenten 41 des Betätigungsrings 4 gebildet.

Die ersten Anschlagkörper 34 können in radialer Richtung so angeordnet sein, dass der Spannring 27 in seiner unwirksamen Ringform an ihnen anliegt.

## Patentansprüche

1. Spannvorrichtung zum Festspannen eines Gegenstandes gegen einen Anschlag, insbesondere zum Festspannen eines beim Betrieb rotierenden Werkzeugs, beispielsweise eine Schleifscheibe (6) oder ein sonstiges scheibenförmiges Werkzeug, an der Abtriebswelle (7) einer Werkzeugmaschine, mit einer ein Innengewinde (14) aufweisenden, auf einen Gewindebolzen, insbesondere ein Gewindeabschnitt (12) der Abtriebswelle (7) aufzuschraubenden Spannmutter (2), die einen nach radial au-ßen vorstehenden Spannflansch (16) bildet, einem zur Spannmutter (2) koaxialen Druckring (3), der dem Spannflansch (16) in axialer Richtung zum festzuspannenden Gegenstand (6) hin vorgelagert ist, mit der Spannmutter (2) drehfest und in axialer Richtung verschieblich verbunden ist und gegen den festzuspannenden Gegenstand (6) wirkt, und einem zur Spannmutter (2) und dem Druckring (3) koaxialen, am Umfang der Spannvorrichtung angeordneten, verdrehbaren und die Spannmutter (2) in beiden Drehrichtungen mitnehmenden Betätigungsring (4), wobei in axialer Richtung zwischen dem Spannflansch (16) und dem Druckring (3) radial innerhalb des Betätigungsrings (4) mit dem Betätigungsring (4) zusammenwirkende Spannmittel (5) angeordnet sind, derart, dass beim Verdrehen des Betätigungsrings (4) in Festspannrichtung (25) der gegen den festzuspannenden Gegenstand (6) wirkende Druckring (3) gegen den Spannflansch (16) fest abgestützt ist und die feste Abstützung beim Verdrehen des Betätigungsrings (4) in entgegengesetzter Löserichtung (26) aufgehoben wird, wobei die Spannmittel (5) einen zur Spannmutter (2) koaxialen Spannring (27) enthalten, der aus einer unwirksamen Ringform größeren Durchmessers, in der die feste Abstützung aufgehoben ist, durch Aufbringen einer Radialkraft vom Betätigungsring (4) her elastisch in eine wirksame Ringform kleineren Durchmessers, in der sich der gegen den festzuspannenden Gegenstand (6) wirkende Druckring (3) über den Spannring (27) fest gegen den Spannflansch (16) abstützt, verformbar ist, **dadurch gekennzeichnet, dass** der Spannring (27) geschlitzt ist, so dass er mit Abstand zueinander angeordnete Spannringenden (28, 29) aufweist, und dass die Spannmittel (5) in radialer Richtung zwischen dem Spannring (27) und dem Betätigungsring (4) über den Umfang verteilt angeordnete Druckkörper (31) enthalten und der Betätigungsring (4) an seinem Innenumfang jeweils einem Druckkörper (31) zugeordnete Druckflächen (32) und in radialer Richtung mit Bezug auf die Druckflächen (32) nach radial außen erweiterte Lösebereiche (33) aufweist, derart, dass beim Verdrehen des Betätigungsrings (4) in Festspannrichtung (25) jeweils eine Druckfläche (32) radial außen am betreffenden Druckkörper (31) angreift, so dass dieser den Spannring (27) in seine wirksame Ringform drückt, und beim Verdrehen des Betätigungsrings (4) in Löserichtung (26) jeweils ein erweiterter Lösebereich (33) zu dem betreffenden Druckkörper (31) gelangt, so dass dieser nach radial außen hin ausweichen kann.

2. Spannvorrichtung nach Anspruch 1, **dadurch gekennzeichnet, dass** der Spannflansch (16) und/oder der Druckring an seiner dem Druckring (3) bzw. dem Spannflansch zugewandten Seite eine kegelartig geneigte Ringschrägfläche (21) mit einer in axialer Richtung vom Druckring (3) bzw. Spannflansch weg nach radial außen gerichteten Neigung aufweist, wobei der Spannring (27) radial außen neben der mindestens einen Ringschrägfläche (21) angeordnet ist und in seiner wirksamen Ringform gegen die mindestens eine Ringschrägfläche (21) gehalten ist und in seiner unwirksamen Ringform der mindestens einen Ringschrägfläche (21) lose gegenüberliegt.

3. Spannvorrichtung nach Anspruch 2, **dadurch gekennzeichnet, dass** der Spannring (27) eine der mindestens einen Ringschrägfläche (21) zugeordnete Spannschrägfläche (30) mit der Ringschrägfläche (21) entsprechender Neigung aufweist.

4. Spannvorrichtung nach einem der Ansprüche 1 bis 3, **dadurch gekennzeichnet, dass** die Druckkörper (31) in Umfangsrichtung jeweils zwischen einem am Betätigungsring (4) angeordneten ersten Anschlagkörper (34) und einem an der Spannmutter (2) oder dem Spannring angeordneten zweiten Anschlagkörper (35) angeordnet sind, wobei der erste Anschlagkörper (34) dem jeweiligen Druckkörper (31) in Löserichtung (26) und der zweite Anschlagkörper (35) dem jeweiligen Druckkörper (31) in Festspannrichtung (25) vorgelagert ist und wobei eine den Betätigungsring (4) in Festspannrichtung (25) beaufschlagende und sich an der Spannmutter (2) oder dem Spannring abstützende Federeinrichtung (36) vorhanden ist.

5. Spannvorrichtung nach Anspruch 4, **dadurch gekennzeichnet, dass** beim Verdrehen des Betätigungsrings (4) in Festspannrichtung (25) die ersten Anschlagkörper (34) an den Druckkörpern (31) anliegen und diese gegen die zweiten Anschlagkörper (35) halten.

6. Spannvorrichtung nach Anspruch 4 oder 5, **dadurch gekennzeichnet, dass** die Federeinrichtung (36) von mehreren sich jeweils einerseits an einem ersten Anschlagkörper (34) an der dem diesem zugeordneten Druckkörper (31) entgegengesetzten Seite und andererseits an einem dem ersten Anschlagkörper (34) in Löserichtung (26) vorgelagerten zweiten Anschlagkörper (35) abstützenden Federelementen (37) gebildet werden.

7. Spannvorrichtung nach Anspruch 6, **dadurch gekennzeichnet, dass** die Federelemente (37) Schraubenfedern sind.

8. Spannvorrichtung nach Anspruch 6 oder 7, **dadurch gekennzeichnet, dass** der Betätigungsring (4) über den Umfang verteilte, durch die ersten Anschlagkörper (34) voneinander getrennte, dem Spannring (27) mit radialem Abstand entlang verlaufende Innenumfangsabschnitte (38) aufweist, so dass zwischen den Innenumfangsabschnitten (38) und dem Spannring (27) jeweils ein sich in Umfangsrichtung erstreckender Zwischenraum (39) vorhanden ist, in den einer der zweiten Anschlagkörper (35) ragt, einerseits von dem der zugeordnete Druckkörper (31) und andererseits von dem das jeweilige Federelement (37) in dem Zwischenraum (39) angeordnet ist, wobei die Innenumfangsabschnitte (38) des Betätigungsrings (4) jeweils eine Druckfläche (32) und einen der Druckfläche (32) benachbarten, nach radial außen erweiterten Lösebereich (33) bilden.

9. Spannvorrichtung nach einem der Ansprüche 1 bis 8, **dadurch gekennzeichnet, dass** die Lösebereiche (33) zumindest an ihrer der jeweiligen Druckfläche (32) zugewandten Seite jeweils eine schräge oder bogenförmige Auflauffläche (40) bilden, über die der betreffende Druckkörper (31) beim Verdrehen des Betätigungsrings (4) in Festspannrichtung (25) aus dem Lösebereich (33) zur Druckfläche (32) gelangt.

10. Spannvorrichtung nach Anspruch 9, **dadurch gekennzeichnet, dass** die Lösebereiche (33) jeweils von einer Aussparung am Innenumfang des Betätigungsrings (4) gebildet werden.

11. Spannvorrichtung nach einem der Ansprüche 4 bis 10, **dadurch gekennzeichnet, dass** die ersten Anschlagkörper (34) von einstückig nach radial innen vorstehenden Anschlagsegmenten, zweckmäßigerweise Ringsegmente (41), des Betätigungsrings (4) gebildet werden.

12. Spannvorrichtung nach einem der Ansprüche 4 bis 11, **dadurch gekennzeichnet, dass** die ersten Anschlagkörper (34) in radialer Richtung so angeordnet sind, dass der Spannring (27) in seiner unwirksamen Ringform an ihnen anliegt.

13. Spannvorrichtung nach einem der Ansprüche 4 bis 12, **dadurch gekennzeichnet, dass** die zweiten Anschlagkörper (35) jeweils von einem von der Spannmutter (2) oder dem Spannring abstehenden Stiftelement gebildet werden.

14. Spannvorrichtung nach einem der Ansprüche 1 bis 13, **dadurch gekennzeichnet, dass** die Druckkörper (31) Wälzkörper sind.

15. Spannvorrichtung nach Anspruch 14, **dadurch gekennzeichnet, dass** die Druckkörper (31) eine zur Spannmutter (2) parallelachsige kreiszylindrische Gestalt aufweisen.

16. Spannvorrichtung nach einem der Ansprüche 1 bis 15, **dadurch gekennzeichnet, dass** die Spannmutter (2) eine das Innengewinde (14) aufweisende, nabenartige Zentralpartie (17) bildet, von der der Spannflansch (16) absteht und auf der der Druckring (3) gelagert ist.

17. Spannvorrichtung nach Anspruch 16, **dadurch gekennzeichnet, dass** zur drehfesten und in axialer Richtung verschieblichen Verbindung des Druckrings (3) mit der Spannmutter (2) die nabenartige Zentralpartie (17) an ihrem Außenumfang und der Druckring (3) an seinem Innenumfang einander zugeordnete Abflachungen (20) aufweisen.

## Claims

1. Clamping fixture for the clamping of an object against a stop, in particular for the clamping of a tool which rotates in operation, for example a grinding disc (6) or other disc-shaped tool, to the output shaft (7) of a machine tool, with a clamping nut (2) with an internal thread (14) for screwing on to a threaded bolt, in particular a threaded section (12) of the output shaft (7), which forms a clamping flange (16) extending radially outwards, and with a pressure ring (3) coaxial to the clamping nut (2) and mounted axially in front of the clamping flange (16) towards the object to be clamped (6), connected to the clamping nut (2) non-rotatably and able to slide axially and acting against the object to be clamped (6), and an actuating ring (4) coaxial to the clamping nut (2) and the pressure ring (3), mounted on the periphery of the clamping fixture, able to rotate and carrying the clamping nut (2) in both directions of rotation, wherein clamping means (5) acting in conjunction with the actuating ring (4) are fitted axially between the clamping flange (16) and the pressure ring (3) and radially within the actuating ring (4) in such a way that, when the actuating ring (4) is rotated in the direction of clamping (25), the pressure ring (3) acting against the object to be clamped (6) is firmly supported against the clamping flange (16), and the firm support is removed when the actuating ring (4) is turned in the opposite release direction (26), wherein the clamping means (5) include a clamping ring (27) coaxial to the clamping nut (2) and which may be elastically deformed from an inoperative annular shape of greater diameter in which the firm support is removed, through the application of a radial force by the actuating ring (4), into an operative annular shape of smaller diameter in which the pressure ring (3) acting against the object to be clamped (6) is supported via the clamping ring (27) firmly against the clamping flange (16), **characterised in that** the clamping ring (27) is slotted so that it has clamping ring ends (28, 29) with clearance from one another, and that the clamping means (5) contain pressure elements (31) distributed over the periphery in the radial direction between the clamping ring (27) and the actuating ring (4), and the actuating ring (4) has on its inner periphery pressure surfaces (32) assigned to each pressure element (31) and, in the radial direction with respect to the pressure surfaces (32), release sections (33) extending radially outwards in such a way that, when the actuating ring (4) is turned in the direction of clamping (25), in each case a pressure surface (32) acts radially outwards on the relevant pressure element (31), so that the latter presses the clamping ring (27) into its operative annular shape, and on turning the actuating ring (4) in the release direction (26), in each case an expanded release section (33) reaches the relevant pressure element (31), so that the latter may be deflected radially outwards.

2. Clamping fixture according to claim 1, **characterised in that** the clamping flange (16) and/or the pressure ring have on the side facing the pressure ring (3) or the clamping flange respectively a tapering inclined ring surface (21) with an inclination aligned in the axial direction radially outwards from the pressure ring (3) or clamping flange respectively, wherein the clamping ring (27) is arranged radially outside next to the inclined ring surface or surfaces (21) and, in its operative annular shape, is held against an inclined ring surface or surfaces (21), and in its inoperative annular shape lies loosely opposite the inclined ring surface or surfaces (21).

3. Clamping fixture according to claim 2, **characterised in that** the clamping ring (27) has an inclination corresponding to the inclined ring surface (21) of the inclined clamping surface (30) assigned to the inclined ring surface or surfaces (21).

4. Clamping fixture according to any of claims 1 to 3, **characterised in that** each of the pressure elements (31) is arranged in the peripheral direction between a first stop element (34) located on the actuating ring (4) and a second stop element (35) located on the clamping nut (2) or the clamping ring, wherein the first stop element (34) is mounted in front of the respective pressure element (31) in the release direction (26) and the second stop element (35) is mounted in front of the respective pressure element in the direction of clamping (25), and wherein there is provided a spring device (36) acting upon the actuating ring (4) in the direction of clamping (25) and resting on the clamping nut (2) or the clamping ring.

5. Clamping fixture according to claim 4 **characterised in that**, on turning the actuating ring (4) in the direction of clamping (25), the first stop elements (34) fit up against the pressure elements (31) and hold the latter against the second stop elements (35).

6. Clamping fixture according to claim 4 or 5, **characterised in that** the spring device (36) is formed by several spring elements (37), each supported on the one hand on a first stop element (34) on the side opposite the pressure element (31) assigned to it, and on the other hand on a second stop element (35) mounted in front of the first stop element (34) in the release direction (26).

7. Clamping fixture according to claim 6, **characterised in that** the spring elements (37) are coil springs.

8. Clamping fixture according to claim 6 or 7, **characterised in that** the actuating ring (4) has internal peripheral sections (38) distributed over the periphery, separated from one another by the first stop elements (34) and running along the clamping ring (27) with radial clearance, so that there is provided between the internal peripheral sections (38) and the clamping ring (27) in each case a space (39) extending in the peripheral direction and into which one of the second stop elements (35) extends, with the assigned pressure element (31) arranged in the space (39) on one side of it and the respective spring element (37) on the other side of it, wherein the internal peripheral sections (38) of the actuating ring (4) respectively form a pressure surface (32) and an adjacent release section (33), extended radially outwards.

9. Clamping fixture according to any of claims 1 to 8 **characterised in that** the release sections (33), at least on their side facing the respective pressure surface (32), each form an inclined or curved contact surface (40), via which the relevant pressure elements (31) reach the pressure surface (32) when the actuating ring (4) is rotated from the release section (33) in the direction of clamping (25).

10. Clamping fixture according to claim 9, **characterised in that** the release sections (33) are each formed by a recess on the inner periphery of the actuating ring (4).

11. Clamping fixture according to any of claims 4 to 10, **characterised in that** the first stop elements (34) are formed by one-piece, radially inwards projecting stop segments, expediently ring segments (41), of the actuating ring (4).

12. Clamping fixture according to any of claims 4 to 11, **characterised in that** the first stop elements (34) are so arranged in the radial direction that the clamping ring (27) fits up against them in its inoperative annular shape.

13. Clamping fixture according to any of claims 4 to 12, **characterised in that** the second stop elements (35) are each formed by a pin element projecting from the clamping nut (2) or the clamping ring.

14. Clamping fixture according to any of claims 1 to 13, **characterised in that** the pressure elements (31) are rolling elements.

15. Clamping fixture according to claim 14, **characterised in that** the pressure elements (31) have a circular cylindrical shape with parallel axis to the clamping nut (2).

16. Clamping fixture according to any of claims 1 to 15, **characterised in that** the clamping nut (2) forms a hub-like central section (17) with the internal thread (14), from which the clamping flange (16) projects and on which the pressure ring (3) is mounted.

17. Clamping fixture according to claim 16 **characterised in that**, for non-rotatable connection of the pressure ring (3) to the clamping nut (2) with the ability to slide, flat sections (20) assigned to one another are provided on the outer periphery of the hub-like central section (17) and on the inner periphery of the pressure ring (3).

## Revendications

1. Dispositif de serrage destiné à serrer un objet contre une butée, en particulier pour serrer un outil, rotatif en cours de service, tel qu'une meule (6) ou un autre outil en forme de disque, contre l'arbre de sortie (7) d'une machine-outil, comportant un écrou de serrage (2) avec un taraudage (14), qui est destiné à être vissé sur un boulon fileté, en particulier un tronçon fileté (12) de l'arbre de sortie (7), et qui forme un collet de serrage (16) en saillie radiale vers l'extérieur, une bague de pression (3), coaxiale à l'écrou de serrage (2), qui est montée en amont du collet de serrage (16) dans le sens axial vers l'objet (6) à serrer, est reliée immobile en rotation avec l'écrou de serrage (2) et mobile dans le sens axial et agit contre l'objet (6) à serrer, et une bague de manoeuvre (4) coaxiale à l'écrou de serrage (2) et à la bague de pression (3), agencée sur le pourtour du dispositif de serrage, apte à tourner et entraînant l'écrou de serrage (2) dans les deux sens de rotation, des moyens de serrage (5), coopérant radialement à l'intérieur de la bague de manoeuvre (4) avec la bague de manoeuvre (4), étant agencés dans le sens axial, entre le collet de serrage (16) et la bague de pression (3), de telle sorte que lors de la rotation de la bague de manoeuvre (4) dans le sens de serrage (25), la bague de pression (3), agissant contre l'objet (6) à serrer, est en appui fermement contre le collet de serrage (16) et l'appui ferme est supprimé lors de la rotation de la bague de manoeuvre (4) dans le sens de desserrage (26) opposé, les moyens de serrage (5) contenant une bague de serrage (27), coaxiale à l'écrou de serrage (2), laquelle, à partir d'une forme annulaire inactive de plus grand diamètre, dans laquelle l'appui ferme est supprimé, peut être déformée élastiquement, moyennant l'application d'une force radiale par la bague de manoeuvre (4), dans une forme annulaire active de plus petit diamètre, dans laquelle la bague de pression (3), agissant contre l'objet (6) à serrer, vient en appui par l'intermédiaire de la bague de serrage (27) fermement contre le collet de serrage (16), **caractérisé en ce que** la bague de serrage (27) est fendue, de telle sorte qu'elle comporte deux extrémités (28, 29) écartées l'une de l'autre, et **en ce que** les moyens de serrage (5), dans le sens radial entre la bague de serrage (27) et la bague de manoeuvre (4), comporte des corps de pression (31) répartis sur la périphérie, et la bague de manoeuvre (4) comporte, sur son pourtour intérieur, des surfaces de pression (32) associées chacune à un corps de pression (31) et, dans le sens radial par rapport aux surfaces de pression (32), des zones de desserrage (33) élargies dans le sens radial vers l'extérieur, de telle sorte que, lors de la rotation de la bague de manoeuvre (4) dans le sens de serrage (25), respectivement une surface de pression (32) entre en contact radialement à l'extérieur contre le corps de pression (31) correspondant, de telle sorte que celui-ci pousse la bague de serrage (27) dans sa forme annulaire active et, lors de la rotation de la bague de manoeuvre (4) dans le sens de desserrage (26), respectivement une zone de desserrage (33) élargie parvient sur le corps de pression (31) correspondant de telle sorte que celui-ci peut s'écarter radialement à l'extérieur.

2. Dispositif de serrage selon la revendication 1, **caractérisé en ce que** le collet de serrage (16) et/ou la bague de pression, sur son côté orienté vers la bague de pression (3) et/ou vers le collet de serrage, comporte une surface annulaire oblique (21), inclinée en forme de cône, avec une inclinaison orientée dans le sens axial en s'écartant de la bague de pression (3) et/ou du collet de serrage vers l'extérieur dans le sens radial, la bague de serrage (27) étant disposée radialement à l'extérieur à côté de ladite au moins une surface annulaire oblique (21) et, dans sa forme annulaire active, est maintenue contre ladite au moins une surface annulaire oblique (21) et, dans sa forme annulaire inactive, est opposée de manière desserrée à ladite au moins une surface annulaire oblique (21).

3. Dispositif de serrage selon la revendication 2, **caractérisé en ce que** la bague de serrage (27) comporte une surface oblique de serrage (30), associée à ladite au moins une surface annulaire oblique (21) et présentant une inclinaison correspondante à la surface annulaire oblique (21).

4. Dispositif de serrage selon l'une quelconque des revendications 1 à 3, **caractérisé en ce que** les corps de pression (31) sont disposés dans le sens périphérique chacun entre un premier corps de butée (34), situé sur la bague de manoeuvre (4), et un deuxième corps de butée (35), situé sur l'écrou de serrage (2) ou la bague de serrage, le premier corps de butée (34) étant situé en amont du corps de pression (31) correspondant dans le sens de desserrage (26) et le deuxième corps de butée (35) étant situé en amont du corps de pression (31) correspondant dans le sens de serrage (25) et étant prévu un dispositif de ressort (36) sollicitant la bague de manoeuvre (4) dans le sens de serrage (25) et prenant appui contre l'écrou de serrage (2) ou la bague de serrage.

5. Dispositif de serrage selon la revendication 4, **caractérisé en ce que**, lors de la rotation de la bague de manoeuvre (4) dans le sens de serrage (25), les premiers corps de butée (34) sont en appui contre les corps de pression (31) et maintiennent ceux-ci contre les deuxièmes corps de butée (35).

6. Dispositif de serrage selon la revendication 4 ou 5, **caractérisé en ce que** le dispositif à ressort (36) est formé par plusieurs éléments de ressort (37) qui prennent appui chacun, d'une part, contre un premier corps de butée (34) sur le côté opposé au corps de pression (31) associé à celui-ci, et, d'autre part, contre un deuxième corps de butée (35), situé en amont du premier corps de butée (34) dans le sens de desserrage (26).

7. Dispositif de serrage selon la revendication 6, **caractérisé en ce que** les éléments de ressort (37) sont des ressorts cylindriques.

8. Dispositif de serrage selon la revendication 6 ou 7, **caractérisé en ce que** la bague de manoeuvre (4) comporte des tronçons périphériques intérieurs (38), répartis sur le pourtour, séparés les uns des autres par les premiers corps de butée (34), s'étendant à distance radiale le long de la bague de serrage (27), de telle sorte qu'il se forme entre les tronçons périphériques intérieurs (38) et la bague de serrage (27) respectivement un espace intermédiaire (39) qui s'étend dans le sens périphérique et dans lequel s'engage l'un des deuxièmes corps de butée (35), d'un coté duquel le corps de pression (31) associé est situé dans l'espace intermédiaire (39) et de l'autre coté duquel l'élément de ressort (37) correspondant est situé dans l'espace intermédiaire (39), les tronçons périphériques intérieurs (38) de la bague de manoeuvre (4) formant chacun une surface de pression (32) et une zone de desserrage (33) élargie radialement vers l'extérieur, adjacente à la surface de pression (32).

9. Dispositif de serrage selon l'une quelconque des revendications 1 à 8, **caractérisé en ce que** les zones de desserrage (33) forment, au moins sur leur côté orienté vers la surface de pression (32) correspondante, respectivement une surface d'appui (40) inclinée ou courbe, par l'intermédiaire de laquelle les corps de pression (31) concernés parviennent, lors de la rotation de la bague de manoeuvre (4) dans le sens de serrage (25), hors de la zone de desserrage (33) vers la surface de pression (32).

10. Dispositif de serrage selon la revendication 9, **caractérisé en ce que** les zones de desserrage (33) sont formées chacune par un évidement sur le pourtour intérieur de la bague de manoeuvre (4).

11. Dispositif de serrage selon l'une quelconque des revendications 4 à 10, **caractérisé en ce que** les premiers corps de butée (34) sont formés d'un seul tenant par des segments de butée en saillie dans le sens radial vers l'intérieur, de manière judicieuse des segments annulaires (41), de la bague de manoeuvre (4).

12. Dispositif de serrage selon l'une quelconque des revendications 4 à 11, **caractérisé en ce que** les premiers corps de butée (34) sont agencés dans le sens radial de telle sorte que la bague de serrage (27) est en appui contre ceux-ci dans sa forme annulaire inactive.

13. Dispositif de serrage selon l'une quelconque des revendications 4 à 12, **caractérisé en ce que** les deuxièmes corps de butée (35) sont formés chacun par un téton en saillie sur l'écrou de serrage (2) ou la bague de serrage.

14. Dispositif de serrage selon l'une quelconque des revendications 1 à 13, **caractérisé en ce que** les corps de pression (31) sont des corps de roulement.

15. Dispositif de serrage selon la revendication 14, **caractérisé en ce que** les corps de pression (31) ont une configuration cylindrique circulaire parallèle à l'axe de l'écrou de serrage (2).

16. Dispositif de serrage selon l'une quelconque des revendications 1 à 15, **caractérisé en ce que** l'écrou de serrage (2) forme une partie centrale (17) en forme de moyeu, munie du taraudage (14), sur laquelle le collet de serrage (16) forme saillie et sur laquelle est montée la bague de pression (3).

17. Dispositif de serrage selon la revendication 16, **caractérisé en ce que**, pour l'assemblage immobile en rotation et mobile dans le sens axial, entre la bague de pression (3) et l'écrou de serrage (2), la partie centrale (17) en forme de moyeu sur son pourtour extérieur et la bague de pression (3) sur son pourtour intérieur comportent des méplats (20) associés l'un à l'autre.
